**Europäisches Patentamt**

**European Patent Office**

**Office européen des brevets**

(19)

(11) Veröffentlichungsnummer: **0 165 594**
A2

(12) # EUROPÄISCHE PATENTANMELDUNG

(21) Anmeldenummer: **85107538.2**

(22) Anmeldetag: **19.06.85**

(51) Int. Cl.⁴: **B 60 P 7/14**

(30) Priorität: **22.06.84 DE 3422970**

(43) Veröffentlichungstag der Anmeldung:
**27.12.85 Patentblatt 85/52**

(84) Benannte Vertragsstaaten:
**CH DE FR GB IT LI NL**

(71) Anmelder: **TS Gesellschaft für Transport- und
Sicherungs-Systeme mbH
Kohlenstrasse 65
D-5600 Wuppertal 22(DE)**

(72) Erfinder: **Berns, Harald, Prof. Dipl.-Ing.
Kronprinzenallee 127
D-5600 Wuppertal 1(DE)**

(74) Vertreter: **Ludewig, Karlheinrich, Dipl.-Ing. et al,
Patentanwälte Dipl.-Phys. Buse Dipl.-Phys. Mentzel
Dipl.-Ing. Ludewig Unterdörnen 114
D-5600 Wuppertal 2(DE)**

(54) **Vorrichtung zum schnell-lösbaren Festklemmen eines Raumteilers an Begrenzungswänden.**

(57) Vorrichtung zum schnell-lösbaren Festklemmen eines endseitig mit einem Klemmkopf ausgerüsteten Raumteilers an Begrenzungswänden, wobei der Klemmkopf aus einem Anlageteil und aus einem daran begrenzt verschiebbar geführten Hakenteil gebildet ist und der schließlich aus einem mit einer Feder zusammenwirkenden, eine Handhabe aufweisenden Stellglied besteht, wobei die Feder und das Stellglied voneinander räumlich getrennt, jeweils für sich zwischen dem Hakenteil und dem Anlageteil angeordnet sind und die Feder vorgespannt ist und den Hakenteil gegenüber dem Anlageteil, unabhängig von der jeweiligen Schaltlage des Stellgliedes, andauernd in Richtung der Klemmstellung belastet und das Stellglied beim Überführen des Hakenteiles in die Offenstellung die Feder einer wachsenden Belastung aussetzt und beim Überführen in die Klemmstellung die Belastung der Feder abnimmt.

FIG.2

**PATENTANWÄLTE**
zugelassene Vertreter beim Europäischen Patentamt

**DIPL.-PHYS. BUSE · DIPL.-PHYS. MENTZEL · DIPL.-ING. LUDEWIG**
Unterdörnen 114 · Postfach 200210 · 5600 Wuppertal 2 · Fernruf (0202) 557022/23/24 · Telex 8591606 wpat

77                                  **5600 Wuppertal 2, den**

<u>Kennwort:</u> "Trennwandverschluß"

TS Gesellschaft für Transport- und Sicherungssysteme mbH;
Kohlenstraße 65, 5600 Wuppertal 22

-------------------------------------------------------------

Vorrichtung zum schnell-lösbaren Festklemmen eines Raumteilers an Begrenzungswänden

-------------------------------------------------------------

Die Erfindung bezieht sich auf eine Vorrichtung zum
schnell-lösbaren Festklemmen eines endseitig mit einem
Klemmkopf ausgerüsteten Raumteilers, wie einer Planke,
an Begrenzungswänden, insbesondere an den aufrechten
Bordwänden eines Transportfahrzeuges, wobei der Klemmkopf aus einem an der Innenseite der Begrenzungswand
abstützbaren Anlageteil besteht und aus einem daran
begrenzt verschiebbar geführten Hakenteil gebildet
ist, der den Randbereich der Begrenzungswand umgreift
und dabei mit seinem freien Hakenende auf der Außenseite
der Begrenzungswand zu liegen kommt, und der schließlich aus einem mit einer Feder zusammenwirkenden, eine
Handhabe aufweisenden Stellglied besteht, welches den
Hakenteil gegenüber dem Anlageteil zwischen einer die
Begrenzungswand freigebenden Offenstellung und einer
die Begrenzungswand dazwischen einpressenden Klemmstellung überführt.

Bei dieser, aus der DE-PS 25 10 493 bekannten Vorrichtung
ist der sich an der Innenseite der Begrenzungswand
abstützende Anlageteil von einem Winkelstück gebildet, dessen einer Schenkel sich starr an der Stirnfläche der Verbindungsplanke befindet, während der zweite Schenkel sich oberseitig in Längsrichtung der Planke erstreckt. Der Hakenteil wird von einem Klemmschlitten gebildet, der winkelförmig abgebogen ist, wobei sein einer Schenkel als Schlitten auf dem Schenkel des Anlageteiles geführt ist, der sich auf der Oberseite der Planke erstreckt. Die Verschiebung des Klemmschlittens gegenüber dem Anlageteil erfolgt mit einem gefederten Kippspannwerk, wobei die am Anlageteil angelenkte Kurbel mit einer Betätigungshandhabe verlängert ist und gelenkig die Koppel aufweist, die anderends an dem Klemmschlitten angreift. Beim Überführen des Klemmschlittens in die Klemmlage wird der Betätigungshebel und damit die Kurbel in eine Übertotpunktlage geführt, so daß ein selbständiges Öffnen des Spannverschlusses verhindert ist. Der gelenkige Angriffspunkt der Kurbel an der Koppel ist dabei federelastisch verstellbar, so daß die Spannkraft und in geringen Grenzen auch der Abstand zwischen dem Anlageteil und dem Klemmschlitten verstellbar ist. Beim bestimmungsgemäßen Gebrauch des Spannverschlusses stehen Klemmschlitten, Koppel, Federn, Kurbel und Anlageteil unter der Wirkung der Spannkraft. Dabei muß die Feder immer derart eingestellt sein, daß der Klemmschlitten und der Anlageteil mit der entsprechenden Vorspannung beiderseits der Begrenzungswand angreifen. Beim Überführen des Spannverschlusses aus der Offenstellung in die Wirkstellung wird der Betätigungshebel aus der Wirkstellung in die Übertotpunktstellung überführt. Dabei wird zunächst der Klemmschlitten in Schließrichtung verschoben, bis sein abgewinkeltes Ende gegen die Außenseite der Begrenzungswand zur Anlage kommt. Beim weiteren Verschwenken der Betätigungshandhabe wird die zwischen Kurbel und Koppel vorgesehene Schraubendruckfeder gespannt, bis die Totpunktlage erreicht ist. Beim Überführen des Betätigungshebels aus der Totpunktlage in die Übertotpunktlage wird die Feder wieder etwas entspannt.

Der Erfindung liegt die Aufgabe zugrunde, eine Vorrichtung der eingangs erläuterten Art zu schaffen, bei der solche Nachteile vermieden sind und die zum Anpressen des Hakenteiles gegen die vom Anlageteil abgestützte Begrenzungswand dienende Feder schon in der Offenstellung eine Vorspannung aufweist und das Einklemmen der Begrenzungswand zwischen dem Anlageteil und dem Hakenteil lediglich über die vorgespannte Feder und nicht über den Betätigungshebel zum Überführen des Klemmkopfes in die Offenstellung erfolgt.

Diese Aufgabe ist erfindungsgemäß dadurch gelöst, daß die Feder und das Stellglied voneinander räumlich getrennt, jeweils für sich zwischen dem Haken- und Anlageteil angeordnet sind, wobei die Feder vorgespannt ist und den Hakenteil gegenüber dem Anlageteil, unabhängig von der jeweiligen Schaltlage des Stellglieds, andauernd in Richtung der Klemmstellung belastet und das Stellglied beim Überführen des Hakenteiles in die Offenstellung die Feder einer wachsenden Belastung aussetzt und beim Überführen in die Klemmstellung die Belastung der Feder abnimmt. Dadurch wird in einfacher Weise erreicht, daß beim bestimmungsgemäßen Gebrauch des Klemmkopfes die Spannung lediglich vom Anlageteil über die Feder zum Hakenteil verläuft. Das als Betätigungshandhabe benutzbare Stellglied ist parallel neben der Feder zwischen Anlageteil und Hakenteil angeordnet und dient lediglich dazu, das Hakenteil aus der Schließstellung in die Offenstellung zu überführen. Zum Überführen des Hakenteils in die Wirkstellung wird das Stellglied in die Schließstellung überführt und das Hakenteil folgt dabei kraftschlüssig unter der Wirkung der Feder dem Stellglied bis in die Wirkstellung.

Der Anlageteil kann eine in Richtung auf das abgewinkelte freie Ende des Hakenteiles zu verstellbare, gegen die Innenseite der Begrenzungswand zur Anlage kommende flache Anlageplatte aufweisen. Mit der verstellbaren Anlageplatte ist somit in besonders einfacher Weise eine Anpassung des Klemmkopfes an unterschiedliche Dicken der Begrenzungswand möglich.

Die flache Anlageplatte kann mit einem rückwärtigen Gewindezapfen in ein ein Gewindeloch aufweisendes Einsatzstück des Anlageteiles eingreifen. Durch Drehen der Anlageplatte und damit des rückwärtigen Gewindezapfens in dem Gewindeloch des Einsatzstückes des Anlageteiles ist somit in besonders einfacher Weise ein Verstellen der Anlageplatte möglich.

Der Anlageteil kann aus zwei im Abstand zueinander angeordneten, länglichen, in Verschieberichtung des Hakenteils verlaufenden Platten bestehen, zwischen denen ein dem Hakenende abgekehrtes Schieberende des Hakenteils begrenzt verschiebbar gelagert ist. Dadurch wird der Anlageteil von einer einfachen Konstruktion gebildet, die lediglich aus zwei im Abstand zueinander angeordneten Platten besteht, wobei der Zwischenraum zwischen den beiden Platten zugleich zur Aufnahme der verschiebbaren Lagerung des Hakenteiles dient.

Der Hakenteil kann einen U-förmigen Bügel aufweisen, dessen einer Schenkel das Hakenende bildet, während der Scheitelteil den oberen Rand der Begrenzungswand übergreift und der zweite Schenkel am Schieberende des
Hakenteils angeformt ist. Mit diesem im wesentlichen
U-förmigen Ende des Hakenteiles kann der Hakenteil in
einfacher Weise die Oberkante der Begrenzungswand übergreifen, wobei der am Schieberende des Hakenteils vorgesehene Anlageteil sich zuverlässig gegen die Innenseite der Begrenzungswand abstützt, während das abgewinkelte Ende des Hakenteils sich gegen die Außenwand der Begrenzungswand anlegt.

Der aus Schieberende und U-förmigem Bügel gebildete
Hakenteil kann aus zwei im Abstand zueinander angeordneten Platten bestehen, die mit ihren Außenseiten
gegen die Innenseiten der den Anlageteil bildenden
Platten anliegen. Dadurch wird auch der Hakenteil von
einer einfachen Konstruktion gebildet, die lediglich
aus zwei im Abstand zueinander angeordneten Platten
besteht, wobei die Außenseiten der beiden Platten im
Bereich des Schieberendes gegen die Innenseiten der
den Anlageteil bildenden Platten zur Anlage kommen und
somit geführt werden.

Die in der Wirkstellung zum Anpressen des abgewinkelten
freien Hakenendes des Hakenteiles gegen die Außenseite
der vom Anlageteil abgestützten Begrenzungswand dienende
Feder kann in Langlöchern der Anlageteil und Schieberende des Hakenteils bildenden Plattenpaare formschlüssig
eingesetzt sein, wobei das eine Ende der Feder sich mit
einer Stützplatte gegen die Langlochenden der beiden
Platten des Anlageteils und das andere Ende der Feder
sich mit einer Stützplatte gegen die Langlochenden der
beiden Platten des Schieberendes des Hakenteils abstützt. Anlageteil und Hakenteil sind somit in einfacher Weise mit einer kräftigen Feder in Spannrichtung belastet, wobei die Feder schon in der Schließstellung des Klemmkopfes unter Vorspannung stehen kann. Der Klemmkopf weist somit in der Wirkstellung, in der er auf die Begrenzungswand aufgesetzt ist, eine kräftige Federspannung auf, so daß ein ungewolltes Lösen des Klemmkopfes von der Begrenzungswand nicht zu befürchten ist.

Das den Hakenteil gegenüber dem Anlageteil verschiebende Stellglied kann aus einem zwischen den beiden Platten des Anlageteils schwenkbar gelagerten, zweiarmigen Hebel bestehen, wobei der erste Hebelarm die Handhabe bildet und der zweite Hebelarm von einem am Lagerende der Handhabe angeformten Exzenter gebildet ist, der gegen die dem Hakenende des Hakenteils abgekehrten Enden der beiden Platten des Hakenteiles in der Wirkstellung anliegt. Mit diesem zweiarmigen Hebel kann der Hakenteil in besonders einfacher Weise aus der Schließstellung bzw. Wirkstellung in die Offenstellung überführt werden, da der am Lagerende der Handhabe angeformte Exzenter des Hakenteil formschlüssig gegenüber dem Anlageteil verschiebt. Beim Verschwenken des Stellgliedes in entgegengesetzter Richtung gibt der am Lagerende der Handhabe angeformte Exzenter den Hakenteil frei, so daß der Hakenteil lediglich unter der Wirkung der Feder in Anlage gegen den Exzenter des Stellgliedes verbleibt, bis das abgewinkelte freie Ende des Hakenteils gegen die Außenseite der Begrenzungswand zur Anlage kommt.

Dem den Handhabenhebel aufweisenden Stellglied, das bei seinem Überführen aus der Schließstellung in die Offenstellung unter der Wirkung der dabei zu spannenden Feder steht, kann eine reibschlüssig an seinem zweiten Hebelarm angreifende Bremse zugeordnet sein. Mit dieser Bremse wird in einfacher Weise das Stellglied in jeder Position zwischen der Schließstellung und der Offenstellung gehalten, so daß bei einem Loslassen des Handhabenhebels des Stellgliedes der Handhabenhebel nicht in seine Grundstellung durch die Wirkung der Feder zurückschlägt. Verletzungen der Bedienungsperson durch ein Zurückschnellen des Betätigungsarmes des Stellgliedes sind somit in einfacher Weise ausgeschlossen.

Die reibschlüssig an den zweiten, als Exzenter ausgebildeten Hebel angreifende Bremse kann von einem auf Biegung beanspruchten Stahldraht bestehen, der in eine, konische Seitenflächen aufweisende, konzentrisch zum Lagerzapfen des Stellgliedes verlaufende Nut klemmend eingreift. Der auf Biegung beanspruchte Stahldraht klemmt sich somit in einfacher Weise zwischen den konischen Seitenflächen der Nut ein, wodurch eine große Reibung zwischen den konischen Seitenflächen der Nut und dem sich dazwischen einklemmenden Stahldraht erzielt wird. Mit geringen Mitteln wird somit eine kräftige Bremse erzielt, die ein ungewolltes bzw. schlagartiges Zurückschwenken des Betätigungsarmes des Stellgliedes bei einem Loslassen nicht zuläßt.

An die den Stahldraht klemmend aufnehmende Nut kann sich ein Nutabschnitt anschließen, der in der Schließstellung des Stellgliedes den Stahldraht klemm- und druckfrei aufnimmt. Dadurch wird in einfacher Weise erreicht, daß nach einem Rückführen des Handhabenhebels des Stellgliedes in die Schließstellung die Bremswirkung des Stahldrahtes vollkommen aufhört und der auf Biegung beanspruchte Stahldraht keinerlei Kräfte auf den zweiten, als Exzenter ausgebildeten Hebel des Stellgliedes ausübt.

Der auf Biegung zu beanspruchende Stahldraht kann einerends mit einem angeformten Lagerauge auf einer zwischen den beiden Platten des Anlageteils angeordneten und mit den Schrauben gesicherten Distanzhülse aufgesetzt sein, während das freie Ende des Stahldrahtes sich gegen eine Distanzhülse abstützt, die ebenfalls zwischen den beiden Platten des Anlageteiles eingespannt ist und die beiden Platten des Schieberendes des Hakenteils führt. Dadurch ist in einfacher Weise der Stahldraht an ohnehin vorhandenen Teilen der Vorrichtung gehaltert. Die beiden Distanzhülsen bilden dabei die Widerlager für den auf Biegung beanspruchten Stahldraht.

Anhand der Zeichnung sind Ausführungsbeispiele der Erfindung näher dargestellt, und zwar zeigen:-

Fig. 1  ein Transportfahrzeug, an dessen aufrechten, als Begrenzungswänden dienenden Bordwänden eine Planke mit Klemmköpfen gehaltert ist,

Fig. 2  den Schnitt nach der Linie II-II der Fig. 1,

Fig. 3  einen von der Zwischenwand gelösten Klemmkopf in Seitenansicht, wobei der Klemmkopf seine Schließstellung einnimmt und zwischen Anlageteil und Hakenteil keine Begrenzungswand angeordnet ist,

Fig. 4  den Schnitt nach der Linie IV-IV der Fig. 3,

Fig. 5    den Schnitt nach der Linie V-V

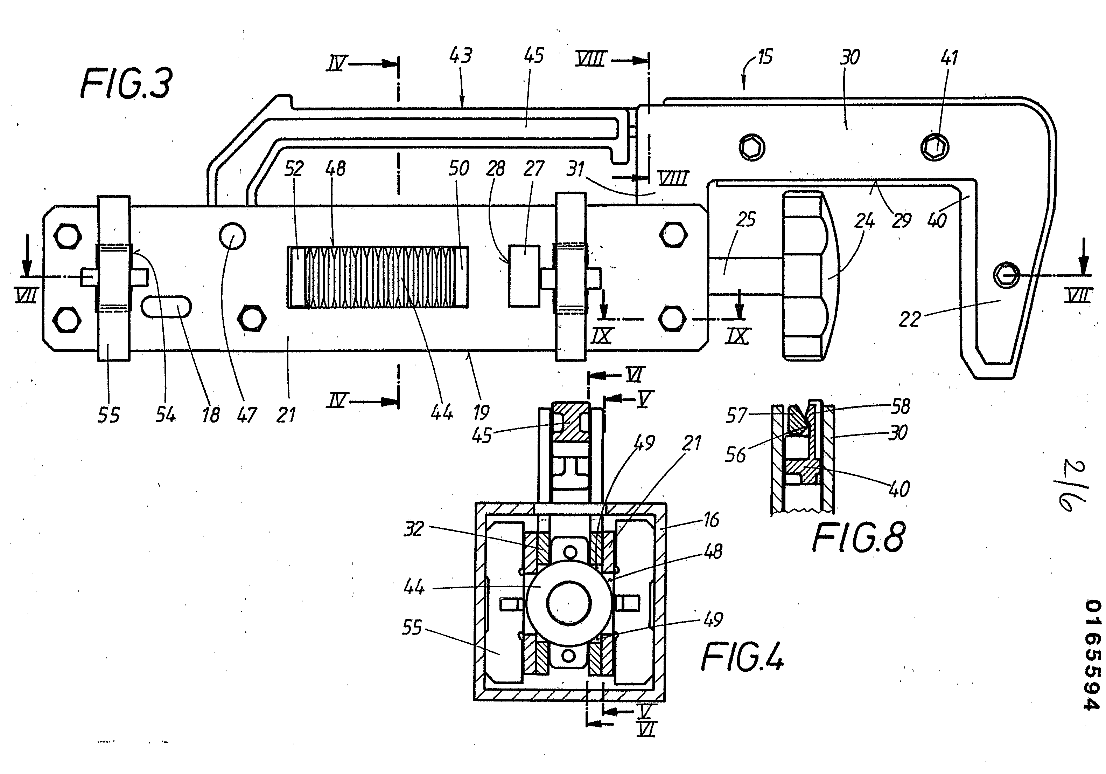

der Fig. 4, wobei der Klemmkopf
jedoch in die Offenstellung überführt worden ist,

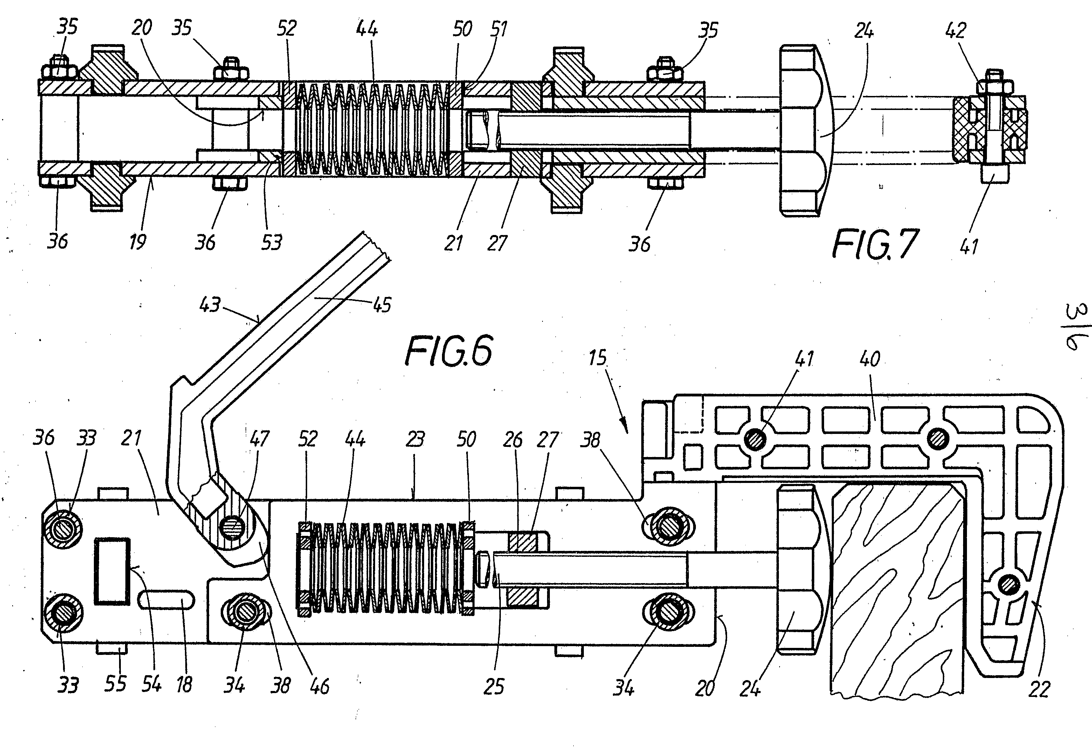

Fig. 6 · den Schnitt nach der Linie VI-VI
der Fig. 4, wobei der Klemmkopf
in die Wirkstellung überführt
worden ist,

Fig. 7    einen Schnitt nach der Linie VII-VII
der Fig. 3,

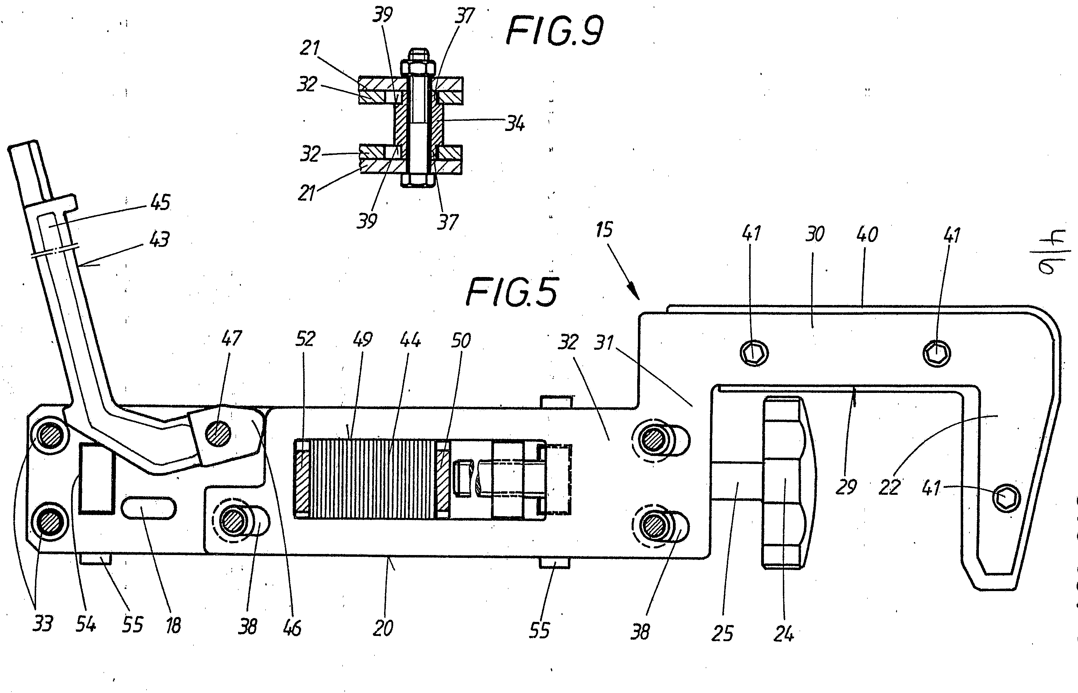

Fig. 8    den Schnitt nach der Linie VIII-VIII
der Fig. 3,

Fig. 9 . den Schnitt nach der Linie IX-IX
der Fig. 3,

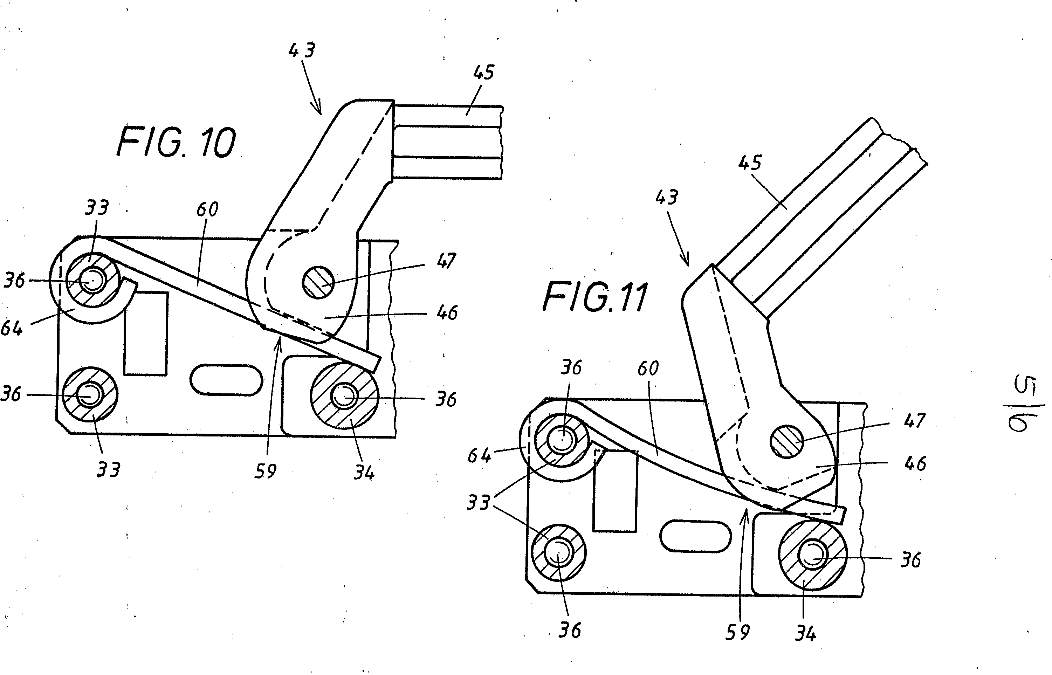

Fig. 10   eine zweite Ausführung des Klemmkopfes in Seitenansicht, wobei der
Klemmkopf  seine Schließstellung
und zwischen Anlageteil und Hakenteil
keine Begrenzungswand angeordnet ist,
teilweise weggebrochen,

Fig. 11   den Klemmkopf in einer der Fig. 10
entsprechenden Seitenansicht,
wobei jedoch das Stellglied in einer
Zwischenlage zwischen Offenstellung
und Schließstellung dargestellt ist,

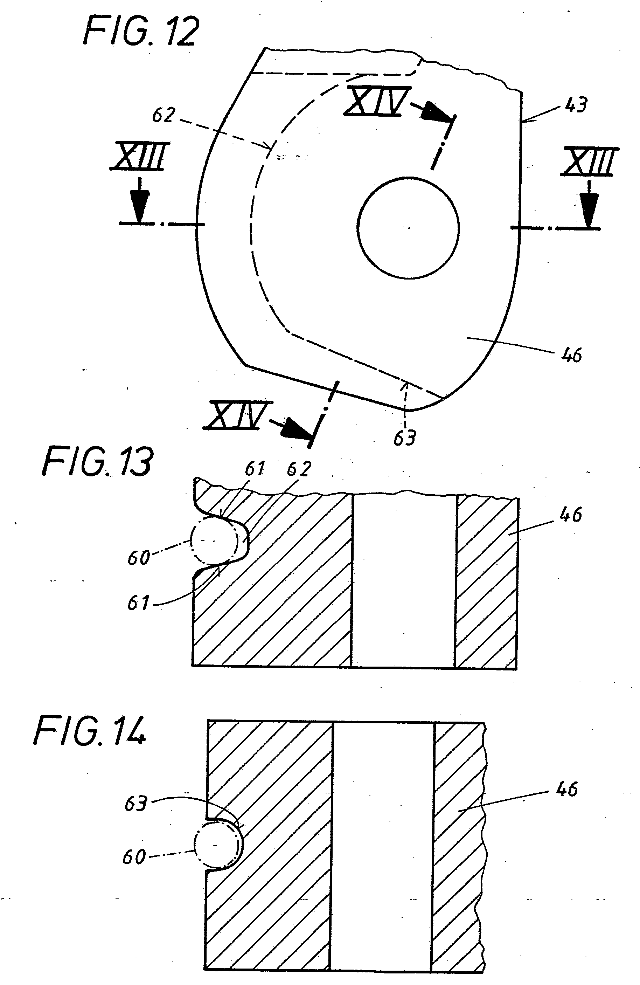

Fig. 12   das Stellglied des Klemmkopfes in einer vergrößerten Seitenansicht,
teilweise weggebrochen,

Fig. 13 den Schnitt nach der Linie XIII-XIII
der Fig. 12 und

Fig. 14 den Schnitt nach der Linie XIV-XIV
der Fig. 12.

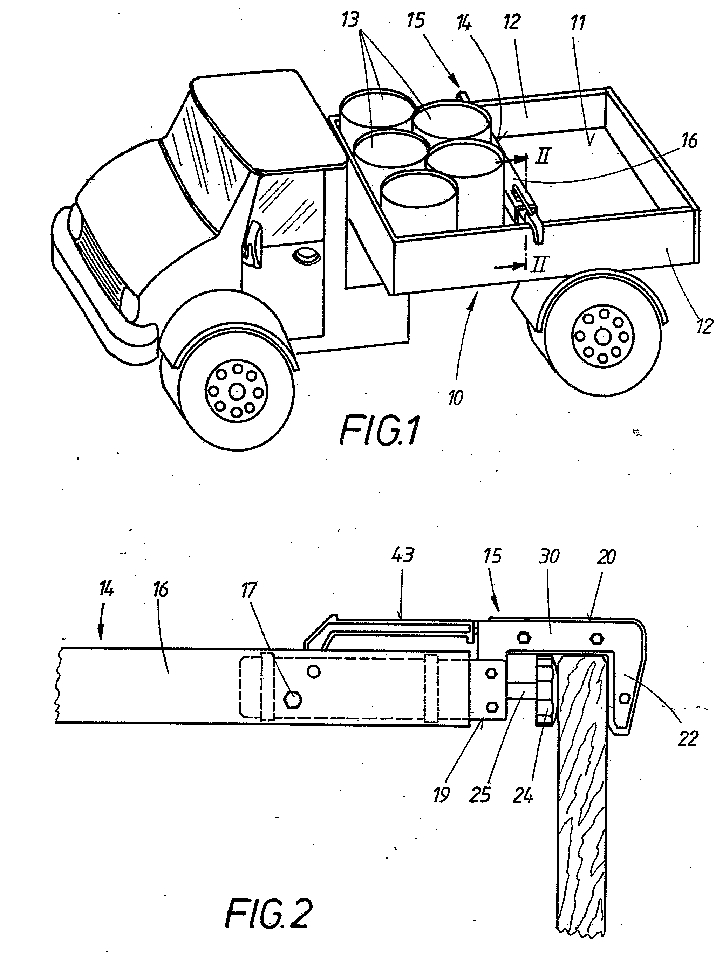

Ein in der Fig. 1 dargestelltes Transportfahrzeug 10 weist eine Ladefläche 11 auf, die mit aufrechten Bordwänden 12 umgrenzt ist. Damit auf der Ladefläche 11 abgestellte Fässer 13 od.dgl. beim bestimmungsgemäßen Gebrauch des Transportfahrzeuges nicht verrutschen können, ist die Ladefläche 11 mit einem Raumteiler 14 unterteilt. Der Raumteiler 14 weist dabei an seinen beiden Enden Klemmköpfe 15 auf, mit denen der Raumteiler 14 an den oberen Rändern der von den Bordwänden 12 gebildeten Begrenzungswänden anklemmbar ist. Ein Verrutschen der Fässer 13 od.dgl. auf der Ladefläche 11 wird somit durch den Raumteiler 14 verhindert.

Der Raumteiler 14 besteht aus einem Rohr 16 mit etwa quadratischem Querschnitt, in dessen Enden die Klemmköpfe 15 mit einem Teil eingeschoben und mit einer Schraube 17 befestigt sind. Die Schraube 17 durchgreift dabei nicht näher dargestellte Durchbrüche des Rohres 16 und ein Langloch 18 im eingeschobenen Ende des Klemmkopfes 15. Die Klemmköpfe 15 sind somit im Rohr 16 begrenzt verschiebbar und somit dem Abstand der Bordwände 12 des Transportfahrzeuges 10 anpaßbar.

Der Klemmkopf 15 besteht aus einem an der Innenseite der Bordwand 12 abstützbaren Anlageteil 19 und einem begrenzt verschiebbar geführten Hakenteil 20.

Der Anlageteil 19 besteht aus zwei im Abstand zueinander angeordneten, länglichen, in Verschieberichtung des Hakenteiles 20 verlaufenden Platten 21, zwischen denen ein dem Hakenende 22 abgekehrtes Schieberende 23 des Hakenteils 20 begrenzt verschiebbar gelagert ist. Wie insbesondere aus der Fig. 6 ersichtlich, ist der Anlageteil mit einer in Richtung auf das abgewinkelte freie Hakenende 22 des Hakenteils 20 zu verstellbare, gegen die Innenseite der Bordwand zur Anlage kommende flache Anlageplatte 24 versehen. Die flache Anlageplatte 24 greift mit einem rückwärtigen Gewindezapfen 25 in ein ein Gewindeloch 26 aufweisendes Einsatzstück 27 des Anlageteils 19 ein. Das Einsatzstück 27 ist dabei lose in Durchbrüche 28 der beiden Platten 21 eingesetzt, die das Anlageteil 19 bilden. Durch Drehen der flachen Anlageplatte 24 mit dem Gewindezapfen 25 im Gewindeloch 26 des Einsatzstückes 27 kann somit der Abstand zwischen der flachen Anlageplatte und dem Hakenende 22 des Hakenteiles 20 eingestellt und somit unterschiedlichen Dicken der Bordwand 12 angepaßt werden.

Der Hakenteil 20 weist einen U-förmigen Bügel 29 auf, dessen einer Schenkel das Hakenende 22 bildet, während sein Scheitelteil 30 den oberen Rand der Bordwand 12 übergreift und der zweite Schenkel 31 am Schieberende 23 des Hakenteils 20 angeformt ist. Mit diesem U-förmigen Bügel 29 wird somit in einfacher Weise der obere Rand der Bordwand 12 übergriffen, wobei sich die flache Anlageplatte 24 des Anlageteiles 19 gegen die Innenwand der Bordwand 12 abstützen kann.

Der aus Schieberende 23 und U-förmigem Bügel 29 gebildete Hakenteil 20 besteht, wie insbesondere aus den
Fig. 4 und 7 ersichtlich, aus zwei im Abstand zueinander
angeordneten Platten 32, die mit ihren Außenseiten im
Bereich des Schieberendes 23 gegen die Innenseiten der
den Anlageteil 19 bildenden Platten 21 anliegen.

Die beiden das Anlageteil 19 bildenden Platten 21 sind
mit Distanzhülsen 33 und 34 im vorbestimmten Abstand
zueinander gehalten, wobei die beiden Platten mit
Muttern 35 aufweisenden Schrauben 36 miteinander verbunden sind, wobei die Schrauben 36 Durchbrüche der
beiden Platten 21 und der Distanzhülsen 33 und 34 durchgreifen. Wie insbesondere aus der Fig. 3 ersichtlich,
sind die beiden Platten 21 des Anlageteils 19 mit fünf
Schrauben 36 miteinander verbunden. Drei dieser Schrauben
36 durchgreifen dabei auch zugleich die beiden Platten
32 des Hakenteils 20, wie insbesondere aus der Fig. 5
ersichtlich ist. Die drei Schreiben, die zugleich auch
die beiden Platten des Hakenteiles 20 durchgreifen,
weisen dabei die Distanzhülsen 34 auf. Die Distanzhülsen
34 weisen, wie insbesondere aus der Fig. 9 ersichtlich,
abgesetzte Enden 37 auf, die in Langlöcher der beiden
Platten 32 des Hakenteiles 20 eingreifen. Die Distanzhülsen 34 liegen somit mit ihren freien Stirnflächen
gegen die Innenseiten der beiden Platten 21 des Anlageteiles 19 und mit den von den abgesetzten Enden 37
gebildeten Ringschultern 39 mit Spiel gegen die Innenseiten der beiden Platten 32 des Hakenteils 20 an.
Mit den Distanzhülsen 34 werden somit sowohl die beiden
Platten 32 des Hakenteiles 20 als auch die beiden
Platten 21 des Anlageteiles 19 im vorbestimmten Abstand
zueinander gehalten, wobei die Verschiebbarkeit des
Hakenteiles 20 gegenüber dem Anlageteil 19 gewährleistet ist. Die beiden Distanzhülsen 33 sind den beiden Schrauben 36 zugeordnet, die nicht den Hakenteil 20 durchgreifen. Die Distanzhülsen 33 liegen mit ihren freien Stirnflächen gegen die Innenseiten der beiden Platten 21 des Anlageteiles 19 an und halten somit die beiden Platten 21 des Anlageteiles 19 im vorbestimmten Abstand.

Die Distanzhülsen 34 halten die beiden Platten 32 des Hakenteiles 20 im Bereich des Schieberendes 23 im vorbestimmten Abstand. Im Bereich des U-Bügels 29 ist zwischen den beiden Platten 32 des Hakenteiles 20 ein Kunststoffeinsatz 40 eingesetzt und mit Schrauben 41 und Muttern 42 gehalten. Die Breite des Kunststoffeinsatzes 40 übersteigt dabei die Breite des U-förmigen Bügels 29, so daß das Hakenende 22 lediglich mit dem Kunststoffeinsatz 40 gegen die einzuspannende Bordwand 12 zur Anlage kommt, um Beschädigungen der in der Regel aus Holz bestehenden Bordwand 12 zu vermeiden. Die flache Anlageplatte 24 des Anlageteiles 19 ist dabei ebenfalls aus Kunststoff hergestellt.

Wie bereits erläutert, greifen die Distanzhülsen 34 mit ihren abgesetzten Enden 37 in Langlöcher 38 der beiden Platten 32 des Hakenteiles 20 ein. Diese Langlöcher 38 verlaufen in Längsrichtung des Anlageteiles 19 und begrenzen mit ihren Längen die Verschiebbarkeit des Hakenteiles 20 gegenüber dem Anlageteil 19. In der Öffenstellung des Klemmkopfes, die in der Fig. 5 dargestellt ist und durch Betätigung des noch zu erläuternden Stellgliedes erreicht wird, liegen die abgesetzten Enden 37 der Distanzhülsen 34 mit nicht näher dargestelltem Spiel gegen die einen Enden der Langlöcher 38 an, während in der in der Fig. 3 dargestellten Schließstellung des Klemmkopfes die abgesetzten Enden 37 der Distanzhülsen 34 gegen die entgegengesetzten Enden der Langlöcher 38 zur Anlage
kommen. Bei der Schließstellung handelt es sich dabei
um die Stellung, die erreicht wird, wenn zwischen
der Anlageplatte 24 des Anlageteiles 19 und dem Hakenende 22 des Hakenteiles 20 keine Bordwand 12 angeordnet
ist. Zwischen der in Fig. 5 dargestellten Offenstellung
und der in Fig. 3 dargestellten Schließstellung befindet
sich die in Fig. 6 dargestellte Wirkstellung, in der
die Anlageplatte 24 des Anlageteiles 19 und das Hakenende des Hakenteiles 20 gegen die entgegengesetzten
Seitenflächen der Bordwand 12 zur Anlage kommen.

Das Verschieben des Hakenteiles 20 gegenüber dem Anlageteil 19 aus der Schließstellung in die Offenstellung
erfolgt entgegen der Wirkung einer Feder 44 mit einem
Stellglied 43. Das Stellglied 43 besteht aus einem
zweiarmigen Hebel 45 und 46, der mit einem Lagerzapfen
47 zwischen den beiden Platten 21 des Anlageteiles 19
schwenkbar gelagert ist. Der erste Hebel 45 des Stellgliedes 43 bildet die Handhabe und der zweite Hebel 46
wird von einem am Lagerende der Handhabe angeformten
Exzenter gebildet, der gegen die dem Hakenende 22 des
Hakenteiles 22 abgekehrten Enden der beiden Platten
32 des Hakenteiles 20 in Wirkstellung anliegt. Diese
Stellung des Stellgliedes 43 ist in der Fig. 6 näher
dargestellt. Dabei ist auch ersichtlich, daß zum Überführen des Hakenteiles 20 aus der Schließstellung in
die Offenstellung die vom ersten Hebel 45 gebildete
Handhabe entgegen dem Uhrzeigersinn zu verschwenken ist.
Beim Verschwenken des die Handhabe bildenden ersten
Hebels 45 im Uhrzeigerinn kommt der vom Exzenter gebildete zweite Hebel 46 von den Enden der beiden Platten 32 des Hakenteiles 20 frei. Die Feder 44 hält den Hakenteil 20 so lange gegen den Exzenter 46 des Stellgliedes 43 in Anlage, bis die Anlageplatte 24 des Anlageteiles 19 und das Hakenende 22 des Hakenteiles 20 gegen die entgegengesetzten Seitenflächen der Bordwand 12 zur Anlage kommen.

Aus den Fig. 6 und 7 ist weiterhin ersichtlich, daß die Feder 44 beim Überführen des Hakenteiles 20 aus der Schließstellung in die Offenstellung gespannt wird. Beim Rückführen des Hakenteiles 20 aus der Offenstellung in die Schließstellung bzw. in die Wirkstellung wird die Feder 44 entspannt.

Beim dargestellten Ausführungsbeispiel ist die Feder 44 von einem Paket Tellerfedern gebildet. In besonders vorteilhafter Weise kann jedoch die Feder 44 auch von einer Schraubedruckfeder gebildet sein. Zur Lagerung und Halterung der Feder 44 sind die beiden Platten 21 des Anlageteiles 19 und die beiden Platten 32 des Hakenteiles 20 mit Langlöcher 48 bzw. 49 versehen. Wie insbesondere aus der Fig. 4 ersichtlich, weisen dabei die Langlöcher 49 im Plattenpaar 32 des Hakenteiles 20 eine etwas größere Breite auf, als die Langlöcher 48 im Plattenpaar 21 des Anlageteiles 19. Dadurch ist die Feder 44 formschlüssig in den Langlöchern 48 und 49 der Plattenpaare 21 und 32 vom Anlageteil 19 und von dem Hakenteil 20 gehaltert. Das eine Ende der Feder 44 stützt sich mit einer Stützplatte 50 gegen die Langlochenden 51 der beiden Platten 21 des Anlageteiles 19 und das andere Ende der Feder 44 sich mit einer Stützplatte 52 gegen die Langlochenden der beiden Platten 32 des Schieberendes 23 des Hakenteiles 20 ab. Damit wird in einfacher Weise eine kraftvolle Federabstützung zwischen dem Anlageteil 19 und dem Hakenteil 20 geschaffen, wodurch der Klemmkopf 15 eine ausreichende Klemmkraft erhält.

Zur Vervollständigung wird noch darauf hingewiesen, daß die Langlöcher 49 in den beiden Platten 32 des Hakenteiles 20 in ihrer Länge so bemessen sind, daß sie auch das mit dem Gewindeloch 26 versehene Einsatzstück 27 für den Gewindezapfen 25 der Anlageplatte 24 erfassen.

Weiterhin weisen die beiden Platten 21 des Anlageteiles 19 Durchbrüche 54 zum Einsetzen von aus Kunststoff bestehenden Lagerstücken 55 auf, mit denen der Klemmkopf 15 in dem Rohr 16 des Raumteilers 14 eingesetzt ist.

An dem Betätigungsarm (Hebel 45) des Stellgliedes 43 ist auch noch eine Verlängerung 57 mit einem Rastvorsprung 56 vorgesehen, der mit einem am Kunststoffeinsatz 40 vorgesehenen Rastvorsprung 58 zusammenwirkt und das Stellglied 43 in der Grundstellung hält.

Bei dem in den Fig. 10 bis 14 dargestellten weiteren Ausführungsbeispiel ist dem den Handhabenhebel 45 aufweisenden Stellglied 43 eine reibschlüssig an seinem zweiten Hebel 46 angreifende Bremse 59 zugeordnet. Mit dieser Bremse 59 wird ein unerwünschtes Zurückschnellen des Handhabenhebels 45 des Stellgliedes 43 in die Grundstellung vermieden, wenn beim Betätigen des Stellgliedes 43 die Bedienungsperson den Handhabenhebel 45 versehentlich loßläßt. Das Stellglied 43 steht bei seinem Überführen aus der Schließstellung in die Offenstellung unter der Wirkung der dabei zu spannenden Feder 44, die bei einem versehentlichen Loslassen des Handhabenhebels 45 im Sinne eines Zurückschnellens des Stellgliedes 43 in die Grundstellung auf das Stellglied 43 einwirkt. In der Offenstellung des Stellgliedes 43 ist demgegemüber eine Übertotpunktlage erreicht, so daß das Stellglied 43 in dieser Stellung verbleibt.

Die reibschlüssig, an den zweiten, als Exzenter ausgebildeten Hebel 46 des Stellgliedes 43 angreifende Bremse besteht aus einem auf Biegung beanspruchten Stahldraht 60, der in eine konische Seitenflächen aufweisende, konzentrisch zum Lagerzapfen 47 des Stellgliedes 43 verlaufende Nut 62 klemmend eingreift. Beim bestimmungsgemäßen Gebrauch wird der auf Biegung beanspruchte Stahldraht 60 zwischen die konisch verlaufenden Seitenflächen 61 der Nut 62 eingeklemmt, so daß eine starke Bremsung erzielt wird, die das Stellglied in jeder eingestellten Stellung festhält. Die Bremskraft kann dabei den jeweiligen Erfordernissen angepaßt sein. Beim Überführen des Handhabenhebels 45 des Stellgliedes 43 aus der Grundstellung in die Offenstellung wird die Feder 44 des Klemmkopfes 15 gespannt, so daß die auf das Stellglied 43 einwirkende Rückstellkraft größer wird. Dieser größer werdenden Federkraft ist dann eine entsprechend größer werdende Bremskraft entgegenzusetzen. Natürlich ist es auch möglich, die Federkraft der Bremse 59 beim Überführen des Stellgliedes 43 aus der Grundstellung in die Offenstellung abfallen zu lassen, um die Betätigung des Stellgliedes nicht weiter zu erschweren, da das Überführen des Stellgliedes 43 aus der Grundstellung in die Offenstellung ohnehin entgegen der Kraft der Feder 44 erfolgt. Ebenso muß das Stellglied 43 auch nicht in jeder Stellung nach dem Loslassen des Handhabenhebels durch die Bremse vollkommen festgestellt werden. Ein langsames, gedämpftes Zurückgehen des Stellgliedes 43 in die Grundstellung dürfte auch zulässig sein.

Wie insbesondere aus der Fig. 12 ersichtlich, schließt sich an die den Stahldraht 60 klemmend aufnehmende Nut 62 ein Nutabschnitt 63 an, der in der Grundstellung des Stellgliedes 43 den Stahldraht 60 klemm- und druckfrei aufnimmt. Die Bremse 59 ist somit vollständig ausgeschaltet, solange das Stellglied 43 sich in der Grundstellung befindet. In der Grundstellung ist somit das aus Kunststoff bestehende Stellglied 43 keinerlei Druck von dem Stahldraht 60 ausgesetzt.

Der auf Biegung beanspruchte Stahldraht 60 ist einerends mit einem angeformten Lagerauge 64 auf einer zwischen den beiden Platten 21 des Anlageteiles 19 angeordnet und mit den Schrauben 35, 36 gesicherten Distanzhülse 33 aufgesetzt. Das freie Ende des Stahldrahtes 60 stützt sich gegen eine Distanzhülse 34 ab, die ebenfalls zwischen den beiden Platten 21 des Anlageteiles 19 eingespannt ist und die beiden Platten 32 des Schieberendes 23 des Hakenteiles 20 führt. Dadurch ist der einen Teil der Bremse 59 bildende Stahldraht 60 in einfacher Weise gehaltert, wobei ohnehin vorhandene Teile des Klemmkopfes 15 für die Befestigung und Abstützung des auf Biegung beanspruchten Stahldrahtes 60 benutzt werden.

Wie bereits erwähnt, sind die dargestellten Ausführungen lediglich beispielsweise Verwirklichungen der Erfindung und diese nicht darauf beschränkt. Vielmehr sind noch mancherlei andere Ausführungen und Anwendungen möglich.

**PATENTANWÄLTE**

zugelassene Vertreter beim Europäischen Patentamt **0165594**

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 557022/23/24 · Telex 8591606 wpat

77           5600 Wuppertal 2, den

Kennwort: "Trennwandverschluß"

TS Gesellschaft für Transport- und Sicherungssysteme mbH,
Kohlenstraße 65, 5600 Wuppertal 22

- 19 -

---

B e z u g s z e i c h e n l i s t e :

---

| | |
|---|---|
| 10 | Transportfahrzeug |
| 11 | Ladefläche |
| 12 | Bordwände |
| 13 | Fässer |
| 14 | Raumteiler |
| 15 | Klemmkopf |
| 16 | Rohr |
| 17 | Schraube |
| 18 | Langloch |
| 19 | Anlageteil |
| 20 | Hakenteil |
| 21 | Platten von 19 |
| 22 | Hakenende |
| 23 | Schieberende |
| 24 | Anlageplatte |
| 25 | Gewindezapfen |
| 26 | Gewindeloch |
| 27 | Einsatzstück |
| 28 | Durchbrüche |
| 29 | U-Bügel |
| 30 | Scheitelteil von 29 |
| 31 | zweiter Schenkel von 29 |
| 32 | Platten von 20 |
| 33 | Distanzhülse |
| 34 | Distanzhülse |

| | |
|---|---|
| 35 | Mutter |
| 36 | Schraube |
| 37 | abgesetzte Enden von 34 |
| 38 | Langlöcher |
| 39 | Ringschulter von 37 |
| 40 | Kunststoffeinsatz |
| 41 | Schraube |
| 42 | Mutter |
| 43 | Stellglied |
| 44 | Feder |
| 45 | Betätigungsarm von 43 |
| 46 | zweiter Hebelarm von 43 |
| 47 | Lagerzapfen |
| 48 | Langlöcher in 21 |
| 49 | Langlöcher in 32 |
| 50 | Stützplatte |
| 51 | Langlochenden |
| 52 | Stützplatte |
| 53 | Langlochenden |
| 54 | Durchbrüche |
| 55 | Lagerstücke |
| 56 | Rastvorsprung an 45 |
| 57 | Verlängerung an 45 |
| 58 | Rastvorsprung an 40 |

0165594

59   Bremse

60   Stahldraht

61   Seitenflächen von 62

62   Nut

63   Nutabschnitt

64   Lagerauge

PATENTANWÄLTE
zugelassene Vertreter beim Europäischen Patentamt  0165594

DIPL.-PHYS. **BUSE** · DIPL.-PHYS. **MENTZEL** · DIPL.-ING. **LUDEWIG**
Unterdörnen 114 · Postfach 200210 · 5600 Wuppertal 2 · Fernruf (0202) 557022/23/24 · Telex 8591606 wpat

77                                              **5600 Wuppertal 2, den**

Kennwort: "Trennwandverschluß"

TS Gesellschaft für Transport- und Sicherungssysteme mbH,
Kohlenstraße 65, 5600 Wuppertal 22

— \ —

A n s p r ü c h e :

1.) Vorrichtung zum schnell-lösbaren Festklemmen eines endseitig mit einem Klemmkopf (15) ausgerüsteten Raumteilers (14), wie einer Planke, an Begrenzungswänden, insbesondere an den aufrechten Bordwänden (12) eines Transportfahrzeuges (10), wobei der Klemmkopf (15) aus einem an der Innenseite der Begrenzungswand (12) abstützbaren Anlageteil (19) besteht und aus einem daran begrenzt verschiebbar geführten Hakenteil (20) gebildet ist, der den Randbereich der Begrenzungswand (12) umgreift und dabei mit seinem freien Hakenende (22) auf der Außenseite der Begrenzungswand (12) zu liegen kommt, und der schließlich aus einem mit einer Feder (44) zusammenwirkenden, eine Handhabe (45) aufweisenden Stellglied (43) besteht, welches den Hakenteil (20) gegenüber dem Anlageteil (19) zwischen einer die Begrenzungswand (12) freigebenden Offenstellung und einer die Begrenzungswand (12) dazwischen einspressenden Klemmstellung überführt,

d a d u r c h   g e k e n n z e i c h n e t ,

daß die Feder (44) und das Stellglied (43) voneinander räumlich getrennt, jeweils für sich zwischen dem Hakenteil (20) und dem Anlageteil (19) angeordnet sind, wobei die Feder (44) vorgespannt ist und den Hakenteil (20) gegenüber dem Anlageteil (19), unabhängig von der jeweiligen Schaltlage des Stellglieds (43), andauernd in Richtung der Klemmstellung belastet, und das Stellglied (43) beim Überführen des Hakenteiles (20) in die Offenstellung die Feder (44) einer wachsenden Belastung aussetzt und beim Überführen in die Klemmstellung die Belastung der Feder (44) abnimmt.

2.) Vorrichtung nach Anspruch 1, dadurch gekennzeichnet, daß der Anlageteil (19) eine in Richtung auf das abgewinkelte, freie Ende (22) des Hakenteiles (20) zu verstellbare, gegen die Innenseite der Begrenzungswand (12) zur Anlage kommende, flache Anlageplatte (24) aufweist.

3.) Vorrichtung nach Anspruch 2, dadurch gekennzeichnet, daß die flache Anlageplatte (24) mit einem rückwärtigen Gewindezapfen (25) in ein ein Gewindeloch (26) aufweisendes Einsatzstück (27) des Anlageteiles (19) eingreift.

4.) Vorrichtung nach einem der Ansprüche 1 bis 3, dadurch gekennzeichnet, daß der Anlageteil (19) aus zwei im Abstand zueinander angeordneten, länglichen, in Verschieberichtung des Hakenteiles (20) verlaufenden Platten (21) besteht, zwischen denen ein dem Hakenende (22) abgekehrtes Schieberende (23) des Hakenteiles (20) begrenzt verschiebbar gelagert ist.

5.) Vorrichtung nach einem der Ansprüche 1 bis 4, dadurch gekennzeichnet, daß der Hakenteil (20) einen U-förmigen Bügel (29) aufweist, dessen einer Schenkel das Hakenende (22) bildet, während der Scheitelteil (30) den oberen Rand der Begrenzungswand (12) übergreift und der zweite Schenkel (31) am Schieberende (23) des Hakenteiles (20) angeformt ist.

6.) Vorrichtung nach Anspruch 5, dadurch gekennzeichnet, daß der aus Schieberende (23) und U-förmigem Bügel (29) gebildete Hakenteil (20) aus zwei im Abstand zueinander angeordneten Platten (32) besteht, die mit ihren Außenseiten gegen die Innenseite der den Anlageteil (19) bildenden Platten (21) anliegen.

7.) Vorrichtung nach Anspruch 5 oder 6, dadurch gekennzeichnet, daß die in der Wirkstellung zum Anpressen des abgewinkelten freien Hakenendes (22) des Hakenteiles (20) gegen die Außenseite der vom Anlageteil (19) abgestützten Begrenzungswand (12) dienende Feder (44) in Langlöchern (48 und 49) der Anlageteil (19) und Schieberende (23) des Hakenteiles (20) bildenden Plattenpaare (21 bzw. 32) formschlüssig eingesetzt ist, wobei das eine Ende der Feder (44) sich mit einer Stützplatte (50) gegen die Langlochenden (51) der beiden Platten (21) des Anlageteiles (19) und das andere Ende der Feder (44) sich mit einer Stützplatte (52) gegen die Langlochenden (53) der beiden Platten (32) des Schieberendes (23) des Hakenteiles (20) abstützt.

8.) Vorrichtung nach einem der Ansprüche 1 bis 7, dadurch gekennzeichnet, daß das den Hakenteil (20) gegenüber dem Anlageteil (19) verschiebende Stellglied (43) aus einem zwischen den beiden Platten (21) des Anlageteiles (19) schwenkbar gelagerten zweiarmigen Hebel (45 und 46) besteht, wobei der erste Hebelarm (45) die Handhabe bildet und der zweite Hebelarm (46) von einem am Lagerende der Handhabe angeformten Exzenter gebildet ist, der gegen die dem Hakenende (22) des Hakenteiles (20) abgekehrten Ende der beiden Platten (32) des Hakenteiles (20) in der Wirkstellung anliegt.

9.) Vorrichtung nach einem der Ansprüche 1 bis 8, dadurch gekennzeichnet, daß dem den Handhabenhebel (45) aufweisenden Stellglied (43), das bei seinem Überführen aus der Schließstellung in die Offenstellung unter der Wirkung der dabei zu spannenden Feder (44) steht, eine reibschlüssig an seinem zweiten Hebel (46) angreifende Bremse (59) zugeordnet ist.

10.) Vorrichtung nach Anspruch 9, dadurch gekennzeichnet, daß die reibschlüssig an den zweiten, als Exzenter ausgebildeten Hebel (46) des Stellgliedes (43) angreifende Bremse (59) aus einem auf Biegung beanspruchten Stahldraht (60) besteht, der in eine konische Seitenflächen (61) aufweisende, konzentrisch zum Lagerzapfen (47) des Stellgliedes (43) verlaufende Nut (62) klemmend eingreift.

11.) Vorrichtung nach Anspruch 9 oder 10, dadurch gekennzeichnet, daß an die den Stahldraht (60) klemmend aufnehmende Nut (62) sich ein Nutabschnitt (63) anschließt, der in der Grundstellung des Stellgliedes (43) den Stahldraht (60) klemm- und druckfrei aufnimmt.

12.) Vorrichtung nach einem der Ansprüche 9 bis 11, dadurch gekennzeichnet, daß der auf Biegung zu beanspruchende Stahldraht (60) einerends mit einem angeformten Lagerauge (64) auf einer zwischen den beiden Platten (61) des Anlageteiles (19) angeordneten und mit den Schrauben (35, 36) gesicherten Distanzhülse (33) aufgesetzt ist, während das freie Ende des Stahldrahtes (60) sich gegen eine Distanzhülse (34) abstützt, die ebenfalls zwischen den beiden Platten (21) des Anlageteiles (19) eingespannt ist und die beiden Platten (32) des Schieberendes (23) des Hakenteiles (20) führt.

116

FIG.1

FIG.2

TS   Gesellschaft...

FIG.3

IV

43  45  VIII

15  30  41

52  48  50  28  27  31

VIII

25  24  29  40

VII  VII

22

IX  IX

55  54  18  47  21

IV

44  19

VI

V

57  58

56  30

40

FIG.8

45

49  21

32  16

44  48

55  49

FIG.4

0165594

FIG.7

FIG.6

3/6

FIG.9

39  37
21
32
34
32
21
39  37

15

FIG.5

41  30  40  41

4/6

47  52  49  44  50  32  31

29  22

41

33  54  55  18  38  46  20  55  38  25  24

FIG. 10

43

45

33

60

36

64

36

33

59

34

47

46

36

FIG.11

43

45

36

60

64

33

36

59

34

47

46

36

0165594

FIG. 12

62

XIV

43

XIII

XIII

46

XIV

63

FIG. 13

61  62

60

46

61

FIG. 14

63

46

60